# EUROPEAN PATENT APPLICATION

(11) **EP 4 344 117 A1**
(43) Date of publication of application: **27.03.2024**
(21) Application number: 23199063.1
(22) Date of filing: 22.09.2023
(51) Int. Cl.: H04L 5/00

(54) **DISTRIBUTED-TONE RESOURCE UNIT DESIGNS FOR WIDE DISTRIBUTION BANDWIDTH 160MHZ IN WIRELESS COMMUNICATIONS**

(30) Priority: 22.09.2022 US 202263376632 P; 21.09.2023 US 202318371168
(71) Applicant: MediaTek Inc., 30078 Hsinchu City (TW)
(72) Inventor: HU, Shengquan, San Jose, 95134 (US); LIU, Jianhan, San Jose, 95134 (US); PARE, Jr., Thomas Edward, San Jose, 95134 (US)
(74) Representative: Hoefer & Partner Patentanwälte mbB

(57) **Abstract**

Techniques pertaining to distributed-tone resource unit, RU, designs for wide distribution bandwidth 160MHz in wireless communications are described. An apparatus, e.g., station, STA, generates a distributed-tone resource unit, dRU, of 52 tones or more using a 26-tone dRU as a building block (2910). The apparatus then performs a wireless communication in a 160MHz distribution bandwidth with the dRU (2920).

## Description

### CROSS REFERENCE TO RELATED PATENT APPLICATION

The present disclosure is part of a non-provisional patent application claiming the priority benefit of U.S. Provisional Patent Application Nos. 63/376,632, filed 22 September 2022, the content of which herein being incorporated by reference in its entirety.

### TECHNICAL FIELD

**The** present disclosure is generally related to wireless communications and, more particularly, to distributed-tone resource unit (RU) designs for wide distribution bandwidth 160MHz in wireless communications.

### BACKGROUND

Unless otherwise indicated herein, approaches described in this section are not prior art to the claims listed below and are not admitted as prior art by inclusion in this section.

In wireless communications such as Wi-Fi (or WiFi) in accordance with the Institute of Electrical and Electronics Engineers (IEEE) 802.11 standards, distributed-tone RU (dRU) has been considered as one efficient method to boost transmission power and improve coverage for 6GHz low-power indoor (LPI) systems. Moreover, dRU tone plans for bandwidths 20MHz, 40MHz and 80MHz have been well studied and proposed previously. For next-generation wireless local area networks (WLANs), there may be more Wi-Fi devices operated in the 6GHz frequency band with a wider bandwidth, such as 160MHz. However, dRU tone plan designs for wider distribution bandwidths such as 160MHz have yet to be specified at the present time. Therefore, there is a need for a solution of dRU designs for wide distribution bandwidth 160MHz in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to dRU designs for wide distribution bandwidth 160MHz in wireless communications. Under various proposed schemes in accordance with the present disclosure, a 26-tone dRU may be used as a basic building block to generate dRU(s) of other size(s) and the hierarchical structure for dRUs on BW160 may be preserved. Under the proposed schemes, all the dRU distribution patterns may be in a repeatable fashion, and dRU tone plans may be either uniformly or near-uniformly distributed. Moreover, no new RU size is introduced herein and there is no tone overlap over the proposed schemes. It is believed that implementations of one or more of the proposed schemes may achieve optimal power boost gains. A method and an apparatus according to the invention are defined in the independent claims. The dependent claims define preferred embodiments thereof.

In one aspect, a method may involve generating a dRU of 52 tones or more using a 26-tone dRU as a building block. The method may also involve performing a wireless communication in a 160MHz distribution bandwidth with the dRU.

In another aspect, an apparatus may include a transceiver configured to communicate wirelessly and a processor coupled to the transceiver. The processor may generate a dRU of 52 tones or more using a 26-tone dRU as a building block. The processor may also perform a wireless communication in a 160MHz distribution bandwidth with the dRU.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IIoT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6A and FIG. 6B each is a diagram of a part of an example design under a proposed scheme in accordance with the present disclosure.
FIG. 7 is a diagram of an example design under a proposed scheme in accordance with the present disclosure.
FIG. 8 is a diagram of an example design under a proposed scheme in accordance with the present disclosure.
FIG. 9 is a diagram of an example design under a proposed scheme in accordance with the present disclosure.
FIG. 10 is a diagram of an example design under a proposed scheme in accordance with the present disclosure.
FIG. 11 is a diagram of an example design under a proposed scheme in accordance with the present disclosure.
FIG. 12 is a diagram of an example scenario under a proposed scheme in accordance with the present disclosure.
FIG. 13 is a diagram of an example design under a proposed scheme in accordance with the present disclosure.
FIG. 14 is a diagram of an example design under a proposed scheme in accordance with the present disclosure.
FIG. 15 is a diagram of an example design under a proposed scheme in accordance with the present disclosure.
FIG. 16 is a diagram of an example design under a proposed scheme in accordance with the present disclosure.
FIG. 17 is a diagram of an example design under a proposed scheme in accordance with the present disclosure.
FIG. 18 is a diagram of an example design under a proposed scheme in accordance with the present disclosure.
FIG. 19 is a diagram of an example design under a proposed scheme in accordance with the present disclosure.
FIG. 20 is a diagram of an example design under a proposed scheme in accordance with the present disclosure.
FIG. 21 is a diagram of an example design under a proposed scheme in accordance with the present disclosure.
FIG. 22 is a diagram of an example simulation under a proposed scheme in accordance with the present disclosure.
FIG. 23 is a diagram of an example simulation under a proposed scheme in accordance with the present disclosure.
FIG. 24 is a diagram of an example simulation under a proposed scheme in accordance with the present disclosure.
FIG. 25 is a diagram of an example simulation under a proposed scheme in accordance with the present disclosure.
FIG. 26 is a diagram of an example simulation under a proposed scheme in accordance with the present disclosure.
FIG. 27 is a diagram of an example simulation under a proposed scheme in accordance with the present disclosure.
FIG. 28 is a block diagram of an example communication system in accordance with an implementation of the present disclosure.
FIG. 29 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to dRU designs for wide distribution bandwidth 160MHz in wireless communications. According to the present disclosure, a number of possible solutions may be implemented separately or jointly. That is, although these possible solutions may be described below separately, two or more of these possible solutions may be implemented in one combination or another.

It is noteworthy that, in the present disclosure, a regular RU (rRU) refers to a RU with tones that are continuous (e.g., adjacent to one another) and not interleaved, interlaced or otherwise distributed. Moreover, a 26-tone regular RU may be interchangeably denoted as RU26 (or rRU26), a 52-tone regular RU may be interchangeably denoted as RU52 (or rRU52), a 106-tone regular RU may be interchangeably denoted as RU106 (or rRU106), a 242-tone regular RU may be interchangeably denoted as RU242 (or rRU242), and so on. Moreover, a 26-tone distributed-tone RU may be interchangeably denoted as dRU26 (or iRU26), a 52-tone distributed-tone RU may be interchangeably denoted as dRU52 (or iRU52), a 106-tone distributed-tone RU may be interchangeably denoted as dRU106 (or iRU106), a 242-tone distributed-tone RU may be interchangeably denoted as dRU242 (or iRU242), and so on. Moreover, an aggregate (26+52)-tone regular multi-RU (MRU) may be interchangeably denoted as MRU78 (or rMRU78), an aggregate (26+106)-tone regular MRU may be interchangeably denoted as MRU132 (or rMRU132), and so on. Furthermore, an aggregate (26+52)-tone distributed-tone MRU (dMRU) may be interchangeably denoted as dMRU132, and so on.

It is also noteworthy that, in the present disclosure, a bandwidth of 20MHz may be interchangeably denoted as BW20 or BW20M, a bandwidth of 40MHz may be interchangeably denoted as BW40 or BW40M, a bandwidth of 80MHz may be interchangeably denoted as BW80 or BW80M, a bandwidth of 160MHz may be interchangeably denoted as BW160 or BW160M, a bandwidth of 240MHz may be interchangeably denoted as BW240 or BW240M, a bandwidth of 320MHz may be interchangeably denoted as BW320 or BW320M, a bandwidth of 480MHz may be interchangeably denoted as BW480 or BW480M, a bandwidth of 500MHz may be interchangeably denoted as BW500 or BW500M, a bandwidth of 520MHz may be interchangeably denoted as BW520 or BW520M, a bandwidth of 540MHz may be interchangeably denoted as BW540 or BW540M, a bandwidth of 640MHz may be interchangeably denoted as BW640 or BW640M.

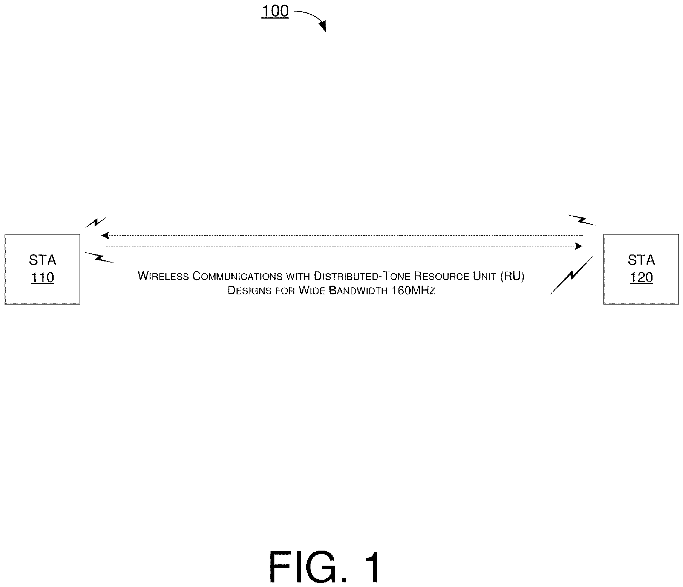

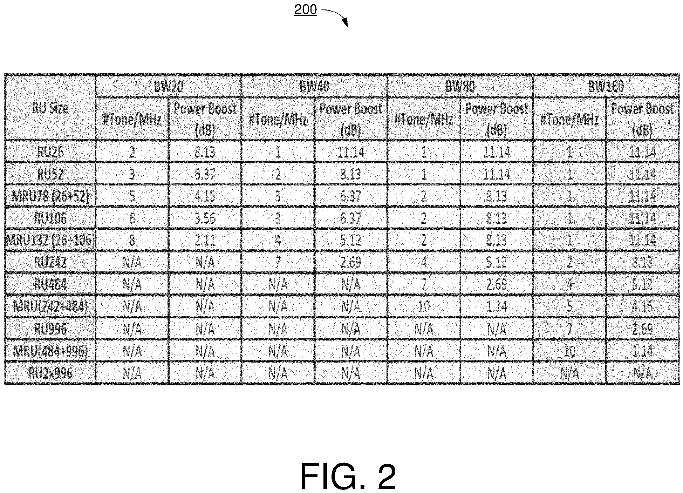

FIG. 1 illustrates an example network environment 100 in which various solutions and schemes in accordance with the present disclosure may be implemented. FIG. 2 ~ FIG. 29 illustrate examples of implementation of various proposed schemes in network environment 100 in accordance with the present disclosure. The following description of various proposed schemes is provided with reference to FIG. 1 ~ FIG. 29.

Referring to FIG. 1, network environment 100 may involve at least a station (STA) 110 communicating wirelessly with a STA 120. Either of STA 110 and STA 120 may be an access point (AP) STA or, alternatively, either of STA 110 and STA 120 may function as a non-AP STA. In some cases, STA 110 and STA 120 may be associated with a basic service set (BSS) in accordance with one or more IEEE 802.11 standards (e.g., IEEE 802.11be and future-developed standards). Each of STA 110 and STA 120 may be configured to communicate with each other by utilizing the various proposed schemes of dRU designs for wide distribution bandwidth 160MHz in wireless communications in accordance with various proposed schemes described below. That is, either or both of STA 110 and STA 120 may function as a "user" in the proposed schemes and examples described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

According to the Federal Communications Commission (FCC) regulations on 6GHz, the power spectral density (PSD) requirement in 6GHz LPI applications is far more stringent than the PSD requirement in 2.4GHz and 5GHz applications. For example, an equivalent isotropic radiated power (EIRP) for an AP is 5dBm/MHz in 6GHz LPI versus an EIRP of 17dBm/MHz for an AP in 5GHz. As another example, the EIRP for an AP is -1dBm/MHz versus an EIRP of 11dBm/MHz for an AP in 5GHz.

FIG. 2 illustrates an example scenario 200 of dRU and dMRU distribution gains. Specifically, the table in FIG. 2 summarizes the dRU/dMRU performance in terms of the number of tones in 1MHz and power boost gains in dB over a distribution bandwidth of 20MHz, 40MHz, 80MHz and 160MHz.

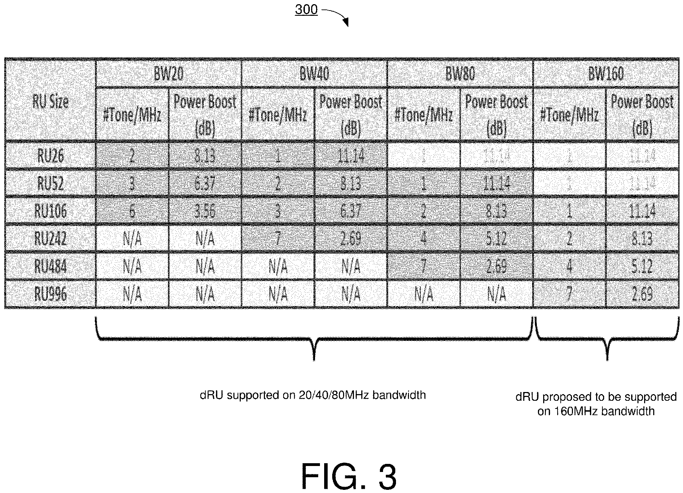

FIG. 3 illustrates an example scenario 300 of consideration of dRU on BW160 and BW320. Under various proposed schemes in accordance with the present disclosure, different sizes of dRU may be utilized for different distribution bandwidths. For a distribution bandwidth of 160MHz, a 106-tone dRU may achieve a full distribution gain and there may be 16 dRU106s which correspondingly support up to 16 orthogonal frequency-division multiple-access (OFDMA) users. Under a proposed scheme, dRU106, dRU242, dRU484 and dRU996 may be utilized on a distribution bandwidth of 160MHz.

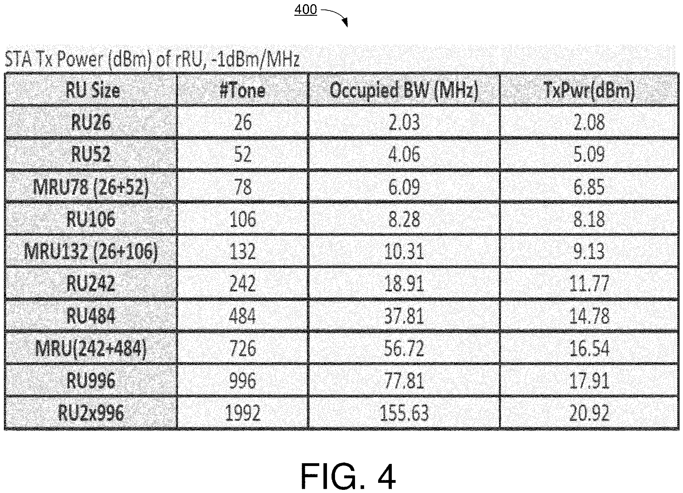

FIG. 4 illustrates an example scenario 400 of rRU transmission (Tx) power. Specifically, the table in FIG. 4 summarizes the Tx power of a rRU for a non-AP STA in a 6GHz LPI system. The maximum Tx power of each RU, especially small-size RU, is limited by the PSD requirement of -1dBm/MHz in the LPI system.

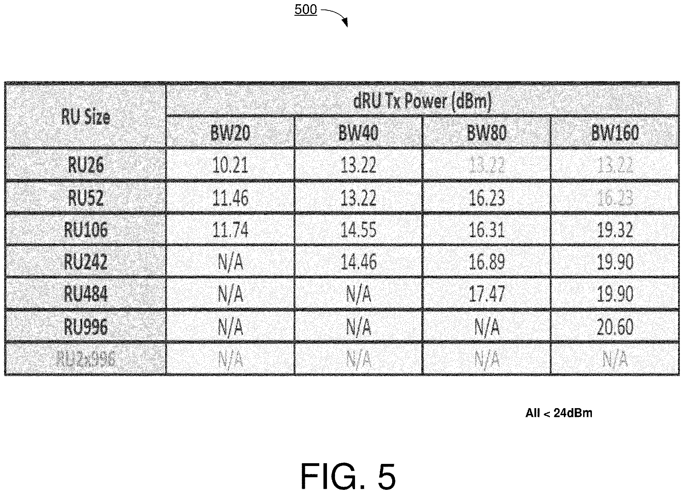

FIG. 5 illustrates an example scenario 500 of dRU Tx power. Referring to FIG. 5, by distributing the tones over a wider bandwidth, the maximum Tx power can be significantly boosted. Notably, the maximum Tx power of a non-AP STA with a dRU on BW160 is not beyond the LPI maximum power limit of 24dBm.

Under various proposed schemes in accordance with the present disclosure, the utilization of dRU may be extended to bandwidth 160MHz. The fundamental design principles of dRU on BW160 may be similar with dRU design on BW20, BW40 and BW80. Under a proposed scheme, a 26-tone dRU may be used as a basic building block to generate dRUs of other sizes. For instance, a 52-tone dRU may be built or otherwise constructed from corresponding two 26-tone dRUs. Also, a 106-tone dRU may be built or otherwise constructed from corresponding two 52-tone dRUs (or four 26-tone dRUs) with two extra padding tones. Additionally, a 242-tone dRU may be built or otherwise constructed from corresponding two 106-tone dRUs and one 26-tone dRU with four extra padding tones. Moreover, a 484-tone dRU may be built or otherwise constructed from corresponding two 242-tone dRUs. Furthermore, a 996-tone dRU may be built or otherwise constructed from corresponding two 484-tone dRUs with 28 extra padding tones.

Under the proposed scheme, the hierarchical structure for dRU on BW160 may be preserved, thereby achieving optimal power boost gains. All dRU distribution patterns may be in a repeatable fashion. The dRU tone plans may be either uniformly or near-uniformly distributed. Moreover, there is no need to introduce new RU size and there is no tone overlap. In addition, the design parameters (e.g., periodicity or repetition period, Nₚ, and dRU tone separation distance, D_{td}, and so on) of dRU on BW160 may be considered as two times (2x) scaling up from dRU on BW80. The dRU subcarrier indices may be generated to optimize peak-to-average-power ratio (PAPR) performance.

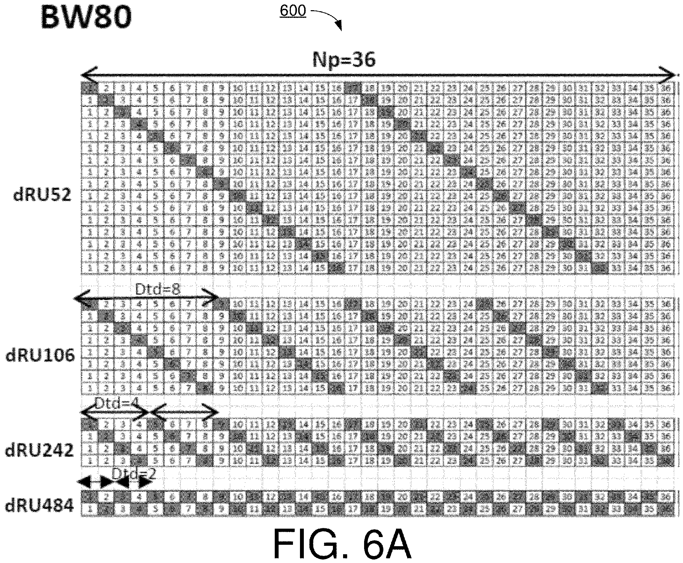

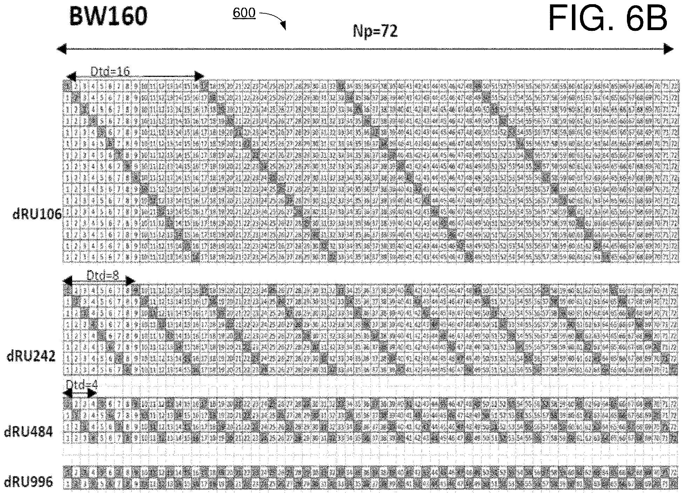

FIG. 6A and FIG. 6B illustrate an example design 600 of a dRU design for BW160 under a proposed scheme in accordance with the present disclosure relative to a dRU design for BW80. FIG. 6A shows a dRU design for BW80 with Nₚ = 36 such that all dRUs may achieve optimal power boost gains and all dRU tone patterns may be repeatable. Moreover, dRU242 and dRU484 may be uniformly distributed. FIG. 6B shows the dRU design for BW160 with Nₚ = 72 such that all dRUs may achieve optimal power boost gains and all dRU tone patterns may be repeatable. Moreover, dRU242 and dRU484 may be uniformly distributed. Referring to FIG. 6A and FIG. 6B, relative to the dRU design for BW80, in the dRU design for BW160 the Nₚ = 36 for BW80 may be extended to Nₚ = 72 for BW160, resulting in D_{td} being two times (2x) scaled up. For instance, for BW80, Nₚ = 36 for dRU52, D_{td} = 8 for dRU106, D_{td} = 4 for dRU242, and D_{td} = 2 dRU484. In contrast, for BW160, Nₚ = 72 for dRU106, D_{td} = 16 for dRU106, D_{td} = 8 for dRU242, D_{td} = 4 for dRU484, and D_{td} = 2 for dRU996.

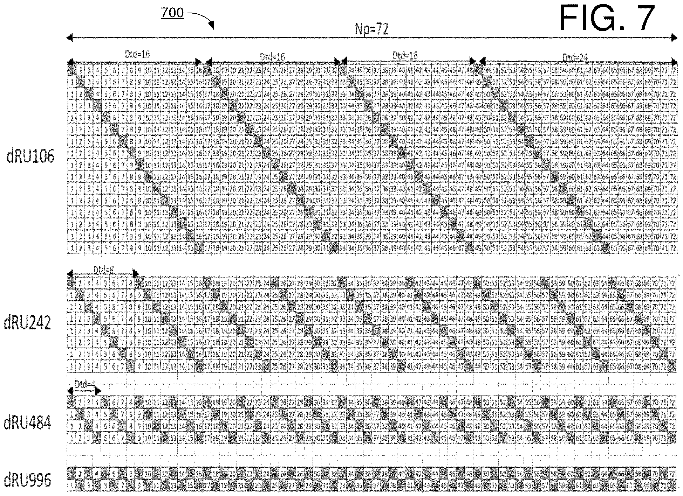

FIG. 7 illustrates an example design 700 of a dRU tone plan for BW160 under a first option (Option-0) with Nₚ = 72 under a proposed scheme in accordance with the present disclosure. Referring to FIG. 7, in this dRU tone plan for BW160, it may be assumed that only 106-tone, 242-tone, 484-tone and 996-tone RU distributions may be supported.

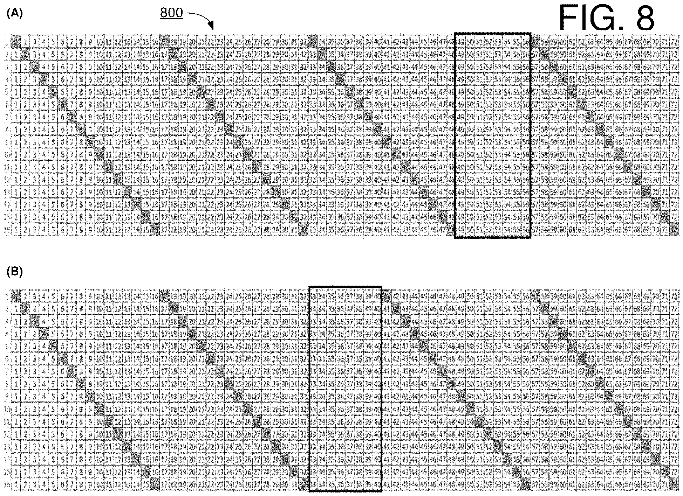

FIG. 8 illustrates an example design 800 of a dRU tone plan for BW160 under the first option (Option-0) with Nₚ = 72 under a proposed scheme in accordance with the present disclosure. Part (A) of FIG. 8 shows a first alternative (Option-0b) of design 800 for dRU106, and Part (B) of FIG. 8 shows a second alternative (Option-0c) of design 800 for dRU 106.

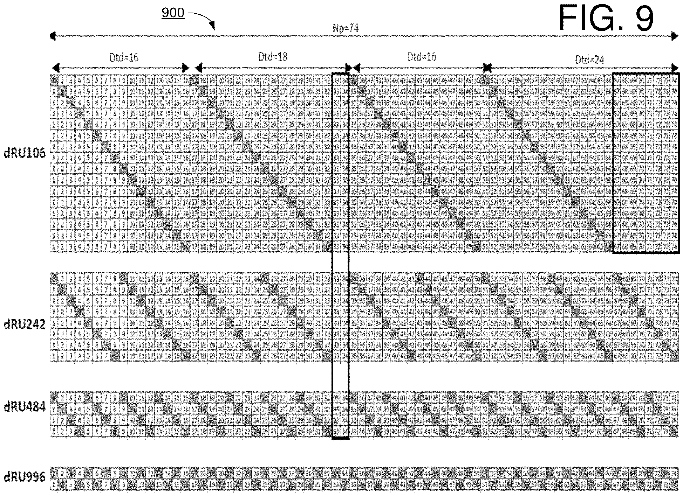

FIG. 9 illustrates an example design 900 of a dRU tone plan for BW160 under a second option (Option-1) with Nₚ = 74 under a proposed scheme in accordance with the present disclosure. Referring to FIG. 9, in this dRU tone plan for BW160, all dRUs may achieve optimal power boost gains and all dRU tone patterns may be repeatable. Moreover, dRU242 and dRU484 may be near-uniformly distributed in this dRU tone plan. Furthermore, dRU996 may be perfect-uniformly distributed in this dRU tone plan.

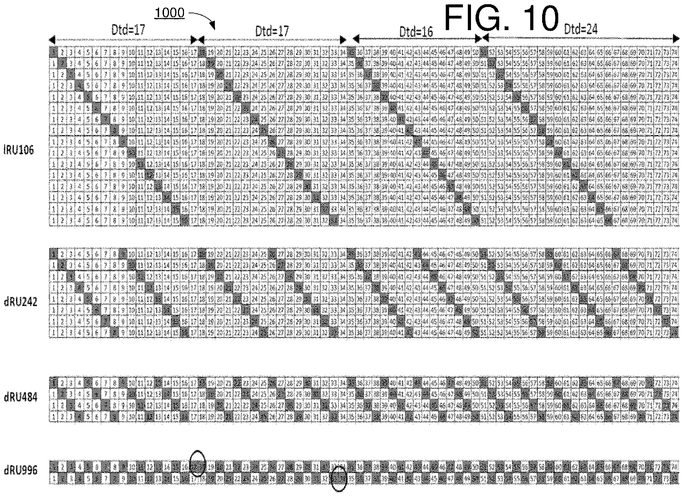

FIG. 10 illustrates an example design 1000 of a dRU tone plan for BW160 under the second option (Option-1) with Nₚ = 74 under a proposed scheme in accordance with the present disclosure. Referring to FIG. 10, design 1000 may provide an alternative (Option-1b) of dRU tone plan for BW160.

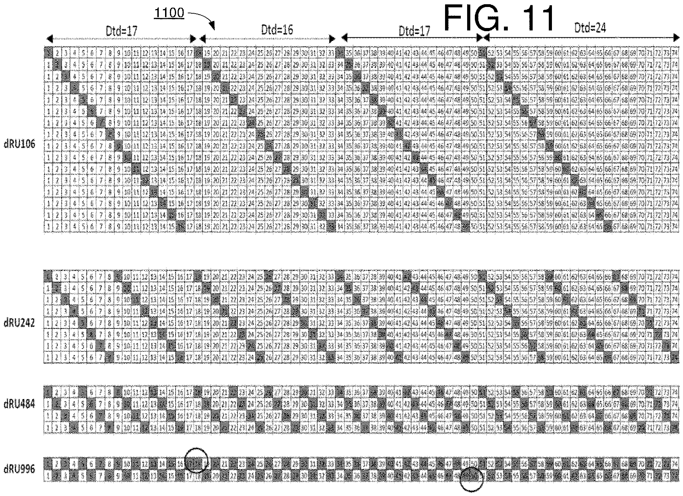

FIG. 11 illustrates an example design 1100 of a dRU tone plan for BW160 under the second option (Option-1) with Nₚ = 74 under a proposed scheme in accordance with the present disclosure. Referring to FIG. 11, design 1100 may provide another alternative (Option-1c) of dRU tone plan for BW160.

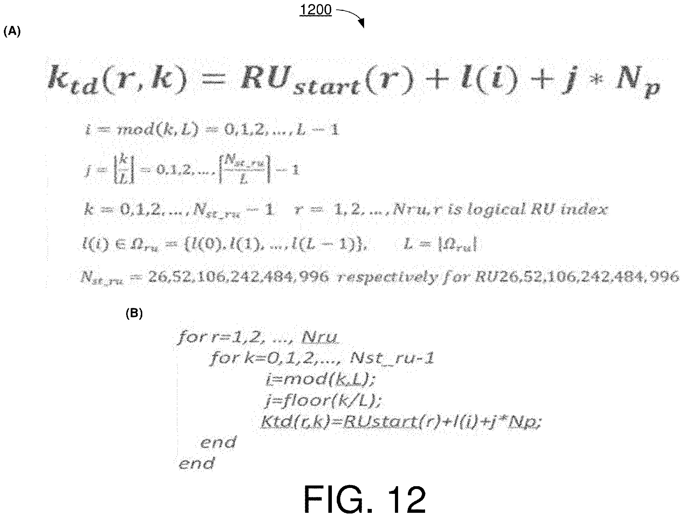

FIG. 12 illustrates an example scenario 1200 under a proposed scheme in accordance with the present disclosure. Part (A) of FIG. 12 shows a formula for 26-tone based dRU design which may be utilized in generating or otherwise constructing dRUs for wireless communications in a wide bandwidth such as 160MHz. Part (B) of FIG. 12 shows a pseudo code which may be utilized in generating or otherwise constructing dRUs for wireless communications in a wide bandwidth such as 160MHz.

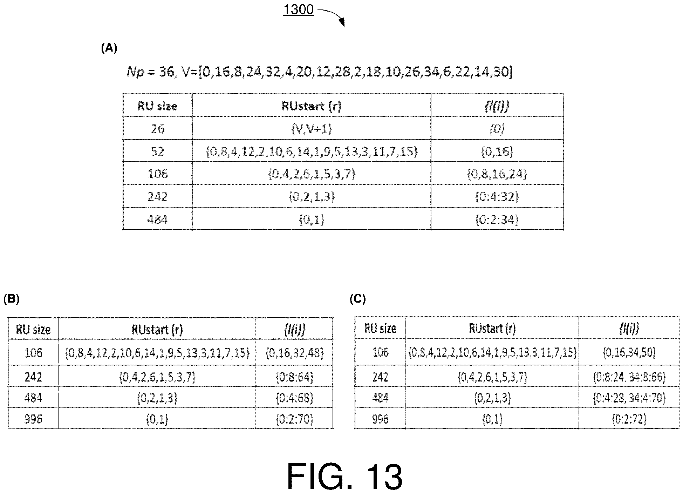

FIG. 13 illustrates an example design 1300 of a dRU tone plan for BW160 under a proposed scheme in accordance with the present disclosure. Specifically, design 1300 pertains to the parameters of RU size, RU starting subcarrier indices (RUₛₜₐᵣₜ(r)), and dRU pattern (*l*(i)). Part (A) of FIG. 13 shows the parameters for BW80 with Nₚ = 36. Part (B) of FIG. 13 shows the parameters for BW160 under Option-0 with Nₚ = 72. Part (C) of FIG. 13 shows the parameters for BW160 under Option-1 with Nₚ = 74.

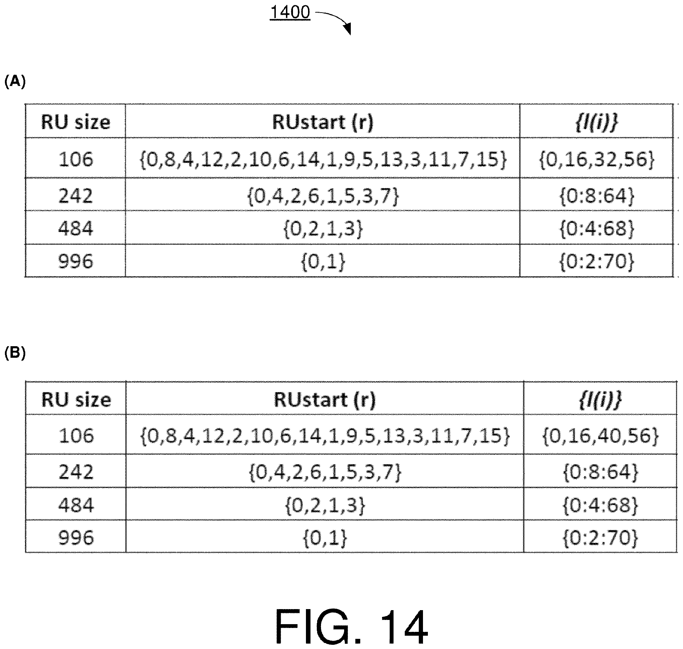

FIG. 14 illustrates an example design 1400 of a dRU tone plan for BW160 under a proposed scheme in accordance with the present disclosure. Specifically, design 1400 pertains to the parameters of RU size, RUₛₜₐᵣₜ(r), and *l*(i) as an alternative to Option-0. Part (A) of FIG. 14 shows the parameters for BW160 under Option-Ob with Nₚ = 72. Part (B) of FIG. 14 shows the parameters for BW160 under Option-0c with Nₚ = 72.

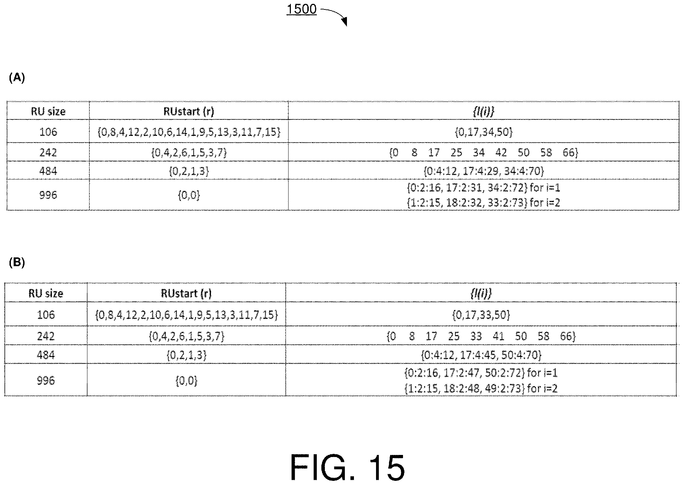

FIG. 15 illustrates an example design 1500 of a dRU tone plan for BW160 under a proposed scheme in accordance with the present disclosure. Specifically, design 1500 pertains to the parameters of RU size, RUₛₜₐᵣₜ(r), and *l*(i) as an alternative to Option-1. Part (A) of FIG. 15 shows the parameters for BW160 under Option-1b with Nₚ = 74. Part (B) of FIG. 15 shows the parameters for BW160 under Option-1c with Nₚ = 74.

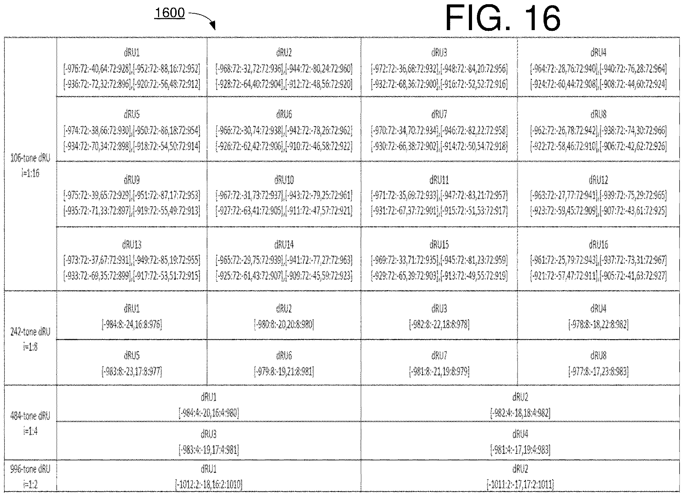

FIG. 16 illustrates an example design 1600 under a proposed scheme in accordance with the present disclosure. Design 1600 may pertain to dRU subcarrier indices for BW160 under Option-0. FIG. 16 shows a table that summarizes dRU subcarrier indices for BW160 under Option-0.

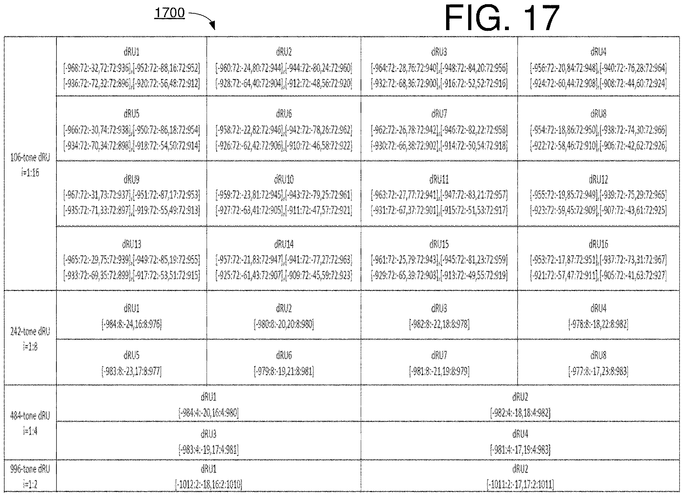

FIG. 17 illustrates an example design 1700 under a proposed scheme in accordance with the present disclosure. Design 1700 may pertain to dRU subcarrier indices for BW160 under Option-Ob. FIG. 17 shows a table that summarizes dRU subcarrier indices for BW160 under Option-Ob.

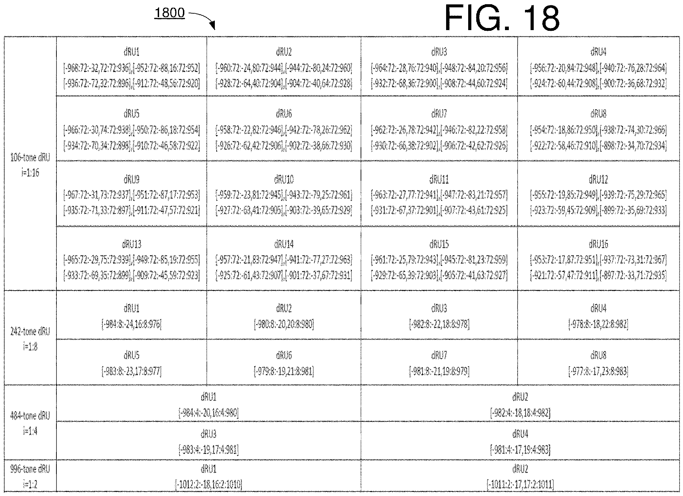

FIG. 18 illustrates an example design 1800 under a proposed scheme in accordance with the present disclosure. Design 1800 may pertain to dRU subcarrier indices for BW160 under Option-0c. FIG. 18 shows a table that summarizes dRU subcarrier indices for BW160 under Option-0c.

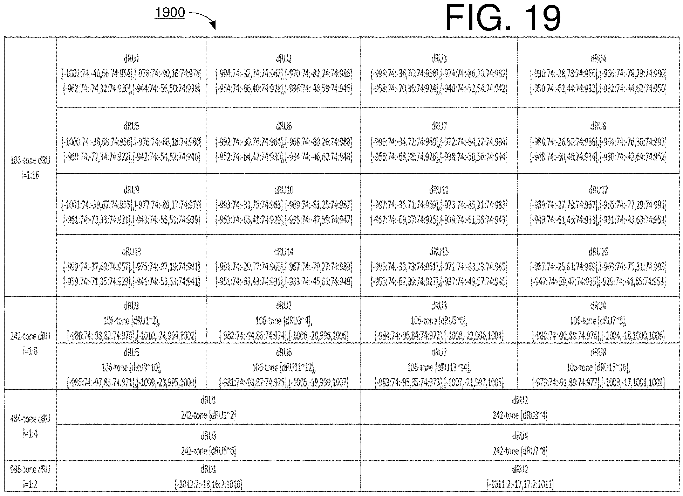

FIG. 19 illustrates an example design 1900 under a proposed scheme in accordance with the present disclosure. Design 1900 may pertain to dRU subcarrier indices for BW160 under Option-1. FIG. 19 shows a table that summarizes dRU subcarrier indices for BW160 under Option-1.

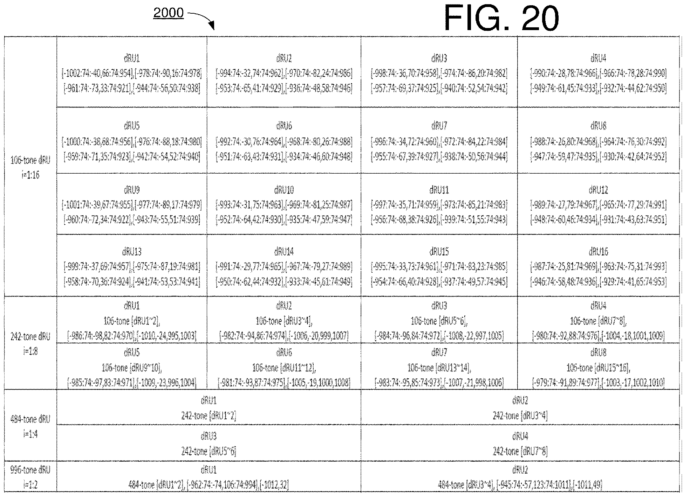

FIG. 20 illustrates an example design 2000 under a proposed scheme in accordance with the present disclosure. Design 2000 may pertain to dRU subcarrier indices for BW160 under Option-1b. FIG. 20 shows a table that summarizes dRU subcarrier indices for BW160 under Option-1b.

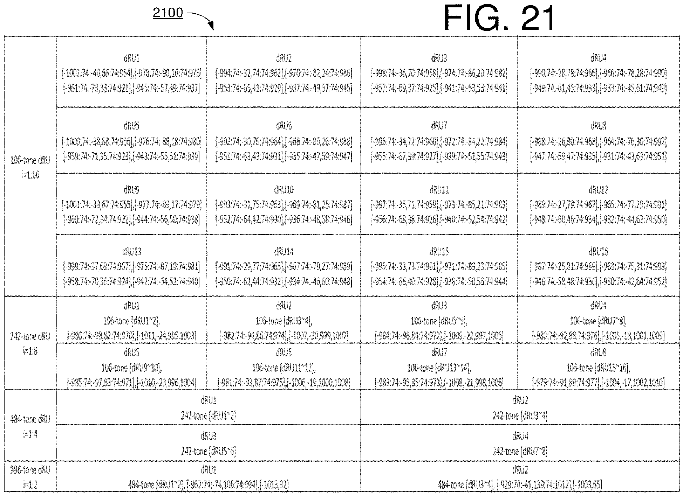

FIG. 21 illustrates an example design 2100 under a proposed scheme in accordance with the present disclosure. Design 2100 may pertain to dRU subcarrier indices for BW160 under Option-1c. FIG. 21 shows a table that summarizes dRU subcarrier indices for BW160 under Option-1c.

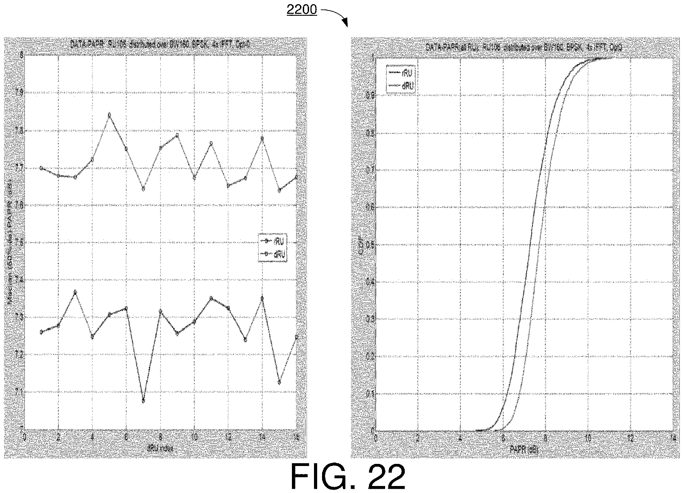

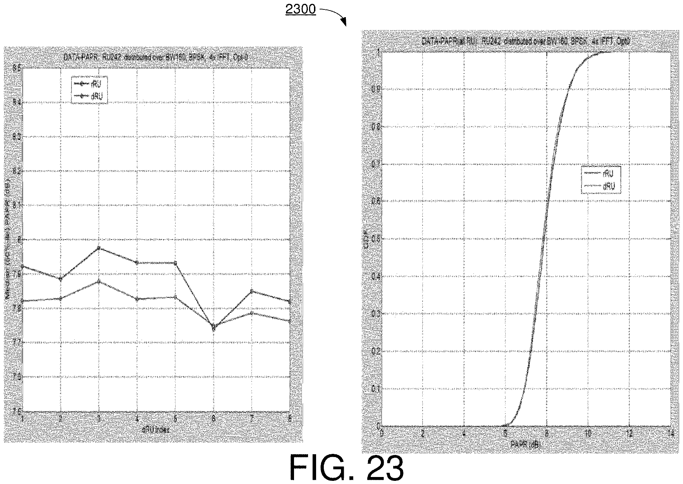

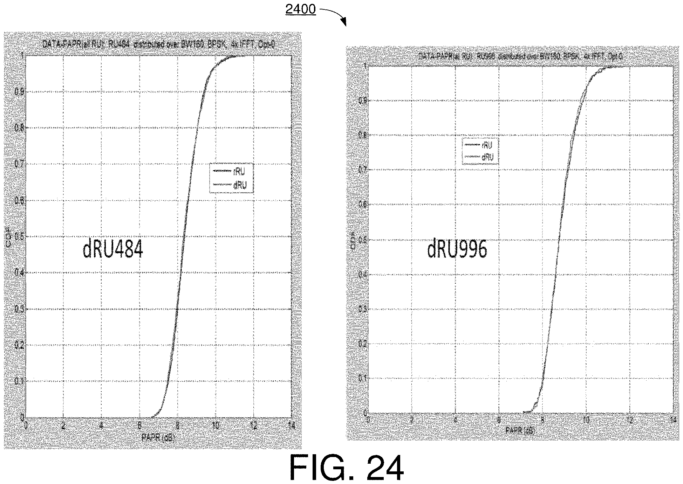

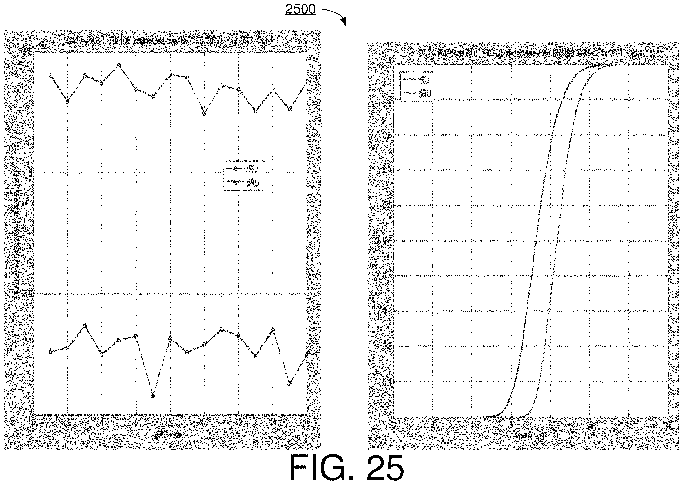

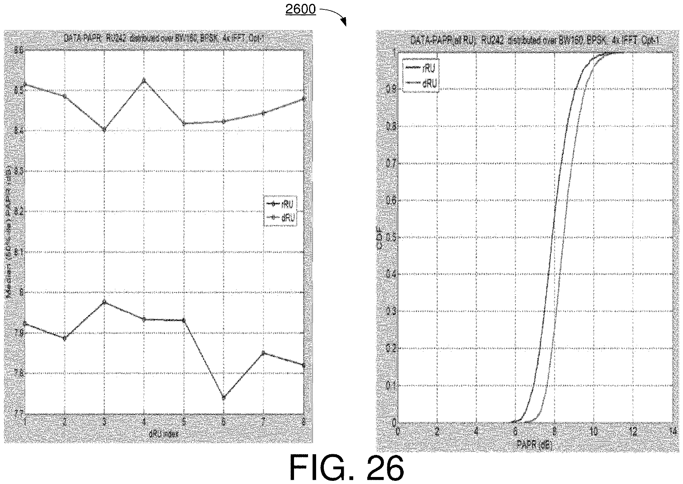

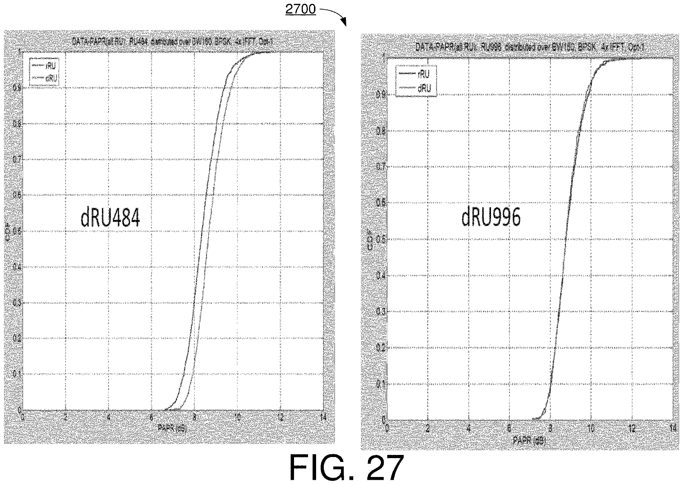

FIG. 22 illustrates an example simulation 2200 of a dRU tone plan with PAPR reduction for dRU106 on BW160 under Option-0. FIG. 23 illustrates an example simulation 2300 of a dRU tone plan with PAPR reduction for dRU242 on BW160 under Option-0. FIG. 24 illustrates an example simulation 2400 of a dRU tone plan with PAPR reduction for dRU484 and dRU996 on BW160 under Option-0. FIG. 25 illustrates an example simulation 2500 of a dRU tone plan with PAPR reduction for dRU106 on BW160 under Option-1. FIG. 26 illustrates an example simulation 2600 of a dRU tone plan with PAPR reduction for dRU242 on BW160 under Option-1. FIG. 27 illustrates an example simulation 2700 of a dRU tone plan with PAPR reduction for dRU484 on BW160 under Option-1.

### Illustrative Implementations

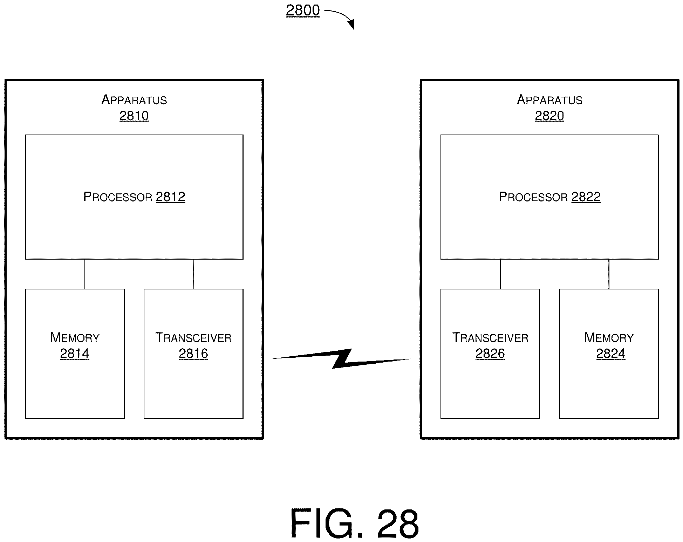

FIG. 28 illustrates an example system 2800 having at least an example apparatus 2810 and an example apparatus 2820 in accordance with an implementation of the present disclosure. Each of apparatus 2810 and apparatus 2820 may perform various functions to implement schemes, techniques, processes and methods described herein pertaining to dRU designs for wide distribution bandwidth 160MHz in wireless communications, including the various schemes described above with respect to various proposed designs, concepts, schemes, systems and methods described above as well as processes described below. For instance, apparatus 2810 may be implemented in STA 110 and apparatus 2820 may be implemented in STA 120, or vice versa.

Each of apparatus 2810 and apparatus 2820 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 2810 and apparatus 2820 may be implemented in a smartphone, a smart watch, a personal digital assistant, a digital camera, or a computing equipment such as a tablet computer, a laptop computer or a notebook computer. Each of apparatus 2810 and apparatus 2820 may also be a part of a machine type apparatus, which may be an loT apparatus such as an immobile or a stationary apparatus, a home apparatus, a wire communication apparatus or a computing apparatus. For instance, each of apparatus 2810 and apparatus 2820 may be implemented in a smart thermostat, a smart fridge, a smart door lock, a wireless speaker or a home control center. When implemented in or as a network apparatus, apparatus 2810 and/or apparatus 2820 may be implemented in a network node, such as an AP in a WLAN.

In some implementations, each of apparatus 2810 and apparatus 2820 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 2810 and apparatus 2820 may be implemented in or as a STA or an AP. Each of apparatus 2810 and apparatus 2820 may include at least some of those components shown in FIG. 28 such as a processor 2812 and a processor 2822, respectively, for example. Each of apparatus 2810 and apparatus 2820 may further include one or more other components not pertinent to the proposed scheme of the present disclosure (e.g., internal power supply, display device and/or user interface device), and, thus, such component(s) of apparatus 2810 and apparatus 2820 are neither shown in FIG. 28 nor described below in the interest of simplicity and brevity.

In one aspect, each of processor 2812 and processor 2822 may be implemented in the form of one or more single-core processors, one or more multi-core processors, one or more RISC processors or one or more CISC processors. That is, even though a singular term "a processor" is used herein to refer to processor 2812 and processor 2822, each of processor 2812 and processor 2822 may include multiple processors in some implementations and a single processor in other implementations in accordance with the present disclosure. In another aspect, each of processor 2812 and processor 2822 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 2812 and processor 2822 is a special-purpose machine specifically designed, arranged and configured to perform specific tasks including those pertaining to dRU designs for wide distribution bandwidth 160MHz in wireless communications in accordance with various implementations of the present disclosure.

In some implementations, apparatus 2810 may also include a transceiver 2816 coupled to processor 2812. Transceiver 2816 may include a transmitter capable of wirelessly transmitting and a receiver capable of wirelessly receiving data. In some implementations, apparatus 2820 may also include a transceiver 2826 coupled to processor 2822. Transceiver 2826 may include a transmitter capable of wirelessly transmitting and a receiver capable of wirelessly receiving data. It is noteworthy that, although transceiver 2816 and transceiver 2826 are illustrated as being external to and separate from processor 2812 and processor 2822, respectively, in some implementations, transceiver 2816 may be an integral part of processor 2812 as a system on chip (SoC), and transceiver 2826 may be an integral part of processor 2822 as a SoC.

In some implementations, apparatus 2810 may further include a memory 2814 coupled to processor 2812 and capable of being accessed by processor 2812 and storing data therein. In some implementations, apparatus 2820 may further include a memory 2824 coupled to processor 2822 and capable of being accessed by processor 2822 and storing data therein. Each of memory 2814 and memory 2824 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 2814 and memory 2824 may include a type of read-only memory (ROM) such as mask ROM, programmable ROM (PROM), erasable programmable ROM (EPROM) and/or electrically erasable programmable ROM (EEPROM). Alternatively, or additionally, each of memory 2814 and memory 2824 may include a type of non-volatile random-access memory (NVRAM) such as flash memory, solid-state memory, ferroelectric RAM (FeRAM), magnetoresistive RAM (MRAM) and/or phase-change memory.

Each of apparatus 2810 and apparatus 2820 may be a communication entity capable of communicating with each other using various proposed schemes in accordance with the present disclosure. For illustrative purposes and without limitation, a description of capabilities of apparatus 2810, as STA 110, and apparatus 2820, as STA 120, is provided below in the context of example process 2900. It is noteworthy that, although a detailed description of capabilities, functionalities and/or technical features of apparatus 2820 is provided below, the same may be applied to apparatus 2810 although a detailed description thereof is not provided solely in the interest of brevity. It is also noteworthy that, although the example implementations described below are provided in the context of WLAN, the same may be implemented in other types of networks.

### Illustrative Processes

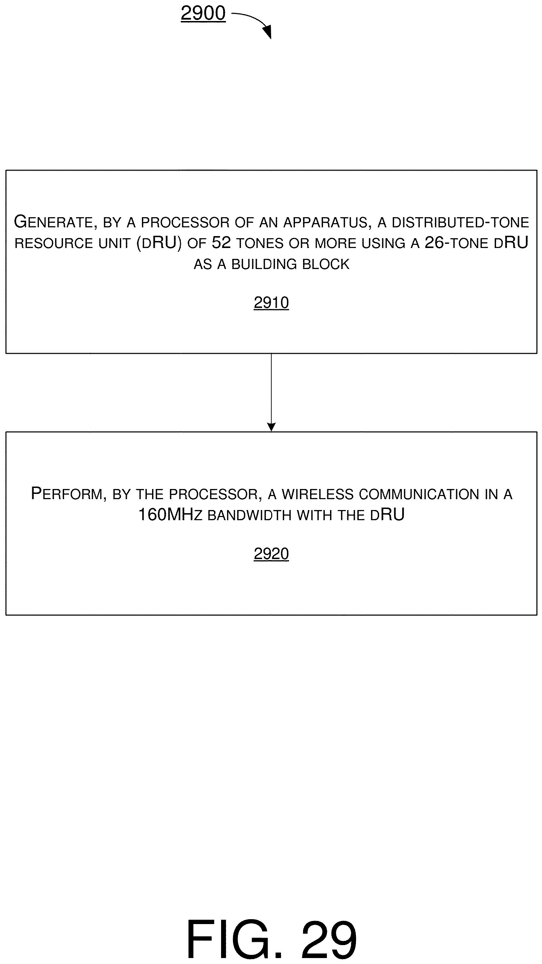

FIG. 29 illustrates an example process 2900 in accordance with an implementation of the present disclosure. Process 2900 may represent an aspect of implementing various proposed designs, concepts, schemes, systems and methods described above. More specifically, process 2900 may represent an aspect of the proposed concepts and schemes pertaining to dRU designs for wide distribution bandwidth 160MHz in wireless communications in accordance with the present disclosure. Process 2900 may include one or more operations, actions, or functions as illustrated by one or more of blocks 2910 and 2920. Although illustrated as discrete blocks, various blocks of process 2900 may be divided into additional blocks, combined into fewer blocks, or eliminated, depending on the desired implementation. Moreover, the blocks/sub-blocks of process 2900 may be executed in the order shown in FIG. 29 or, alternatively, in a different order. Furthermore, one or more of the blocks/sub-blocks of process 2900 may be executed repeatedly or iteratively. Process 2900 may be implemented by or in apparatus 2810 and apparatus 2820 as well as any variations thereof. Solely for illustrative purposes and without limiting the scope, process 2900 is described below in the context of apparatus 2810 implemented in or as STA 110 functioning as a non-AP STA and apparatus 2820 implemented in or as STA 120 functioning as an AP STA of a wireless network such as a WLAN in network environment 100 in accordance with one or more of IEEE 802.11 standards. Process 2900 may begin at block 2910.

At 2910, process 2900 may involve processor 2812 of apparatus 2810 generating a dRU of 52 tones or more using a 26-tone dRU as a building block. Process 2900 may proceed from 2910 to 2920.

At 2920, process 2900 may involve processor 2812 performing, via transceiver 2816, a wireless communication in a 160MHz distribution bandwidth with the dRU.

In some implementations, the dRU may include a 106-tone dRU built from corresponding two 52-tone dRUs, or four 26-tone dRUs, with two extra padding tones. In such cases, each of the corresponding two 52-tone dRUs may be built from corresponding two 26-tone dRUs.

In some implementations, the dRU may include a 242-tone dRU built from corresponding two 106-tone dRUs and one 26-tone dRU with four extra padding tones. In such cases, each of the corresponding two 106-tone dRUs may be built from corresponding two 52-tone dRUs, or four 26-tone dRUs, with two extra padding tones. Moreover, each of the corresponding two 52-tone dRUs may be built from corresponding two 26-tone dRUs.

In some implementations, the dRU may include a 484-tone dRU built from corresponding two 242-tone dRUs. In such cases, each of the corresponding two 242-tone dRUs may be built from corresponding two 106-tone dRUs and one 26-tone dRU with four extra padding tones. Additionally, each of the corresponding two 106-tone dRUs may be built from corresponding two 52-tone dRUs, or four 26-tone dRUs, with two extra padding tones. Moreover, each of the corresponding two 52-tone dRUs may be built from corresponding two 26-tone dRUs.

In some implementations, the dRU may include a 996-tone dRU built from corresponding two 484-tone dRUs and one 26-tone dRU with twenty-eight extra padding tones. In such cases, each of the corresponding two 484-tone dRUs may be built from corresponding two 242-tone dRUs. Additionally, each of the corresponding two 242-tone dRUs may be built from corresponding two 106-tone dRUs and one 26-tone dRU with four extra padding tones. Moreover, each of the corresponding two 106-tone dRUs may be built from corresponding two 52-tone dRUs, or four 26-tone dRUs, with two extra padding tones. Furthermore, each of the corresponding two 52-tone dRUs may be built from corresponding two 26-tone dRUs.

In some implementations, parameters of the dRU used in the wireless communication in the 160MHz distribution bandwidth may be two times scaled up from corresponding parameters of the dRU used in wireless communications in an 80MHz bandwidth. For instance, the parameters of the dRU used in the wireless communication in the 160MHz distribution bandwidth may include a periodicity or repetition period (Nₚ) and a dRU tone separation distance (D_{td}).

In some implementations, for the wireless communication in the 160MHz distribution bandwidth, Nₚ = 72 (e.g., Option-0, Option-Ob or Option-0c) and D_{td} = 16, 8 and 4 for the 106-tone dRU, the 242-tone dRU and the 484-tone dRU, respectively.

In some implementations, for the wireless communication in the 160MHz distribution bandwidth, Nₚ = 72 (e.g., Option-0, Option-Ob or Option-0c) and a tone plan of the dRU may be uniformly distributed in an event that the dRU comprises a 242-tone dRU, a 484-tone dRU or a 996-tone dRU.

In some implementations, for the wireless communication in the 160MHz distribution bandwidth, Nₚ = 74 (e.g., Option-1).

In some implementations, a tone plan of the dRU may include a distribution pattern repeated four times and a non-repeatable pattern. For instance, in a frequency domain: (a) the non-repeatable pattern is to a right side of the distribution pattern repeated four times (as in Option-0 shown in FIG. 7); or (b) the non-repeatable pattern is between the distribution pattern repeated three times on a left side thereof and the distribution pattern repeated one time on a right side thereof (as in Option-Ob shown in part (A) of FIG. 8); or (c) the non-repeatable pattern is between the distribution pattern repeated two times on the left side thereof and the distribution pattern repeated two times on the right side thereof (as in Option-0c shown in part (B) of FIG. 8).

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
generating, by a processor of an apparatus, a distributed-tone resource unit, in the following also referred to as dRU, of 52 tones or more using a 26-tone dRU as a building block (2910); and
performing, by the processor, a wireless communication in a 160MHz distribution bandwidth with the dRU (2920).

2. An apparatus (2810), comprising:
a transceiver (2816) configured to communicate wirelessly; and
a processor (2812) coupled to the transceiver (2816) and configured to perform operations comprising:
generating a distributed-tone resource unit, in the following also referred to as dRU, of 52 tones or more using a 26-tone dRU as a building block; and
performing, via the transceiver (2816), a wireless communication in a 160MHz distribution bandwidth with the dRU.

3. The method of Claim 1 or the apparatus of Claim 2, wherein the dRU comprises a 106-tone dRU built from corresponding two 52-tone dRUs, or four 26-tone dRUs, with two extra padding tones, and wherein each of the corresponding two 52-tone dRUs is built from corresponding two 26-tone dRUs.

4. The method of Claim 1 or the apparatus of Claim 2, wherein the dRU comprises a 242-tone dRU built from corresponding two 106-tone dRUs and one 26-tone dRU with four extra padding tones, wherein each of the corresponding two 106-tone dRUs is built from corresponding two 52-tone dRUs, or four 26-tone dRUs, with two extra padding tones, and wherein each of the corresponding two 52-tone dRUs is built from corresponding two 26-tone dRUs.

5. The method of Claim 1 or the apparatus of Claim 2, wherein the dRU comprises a 484-tone dRU built from corresponding two 242-tone dRUs, wherein each of the corresponding two 242-tone dRUs is built from corresponding two 106-tone dRUs and one 26-tone dRU with four extra padding tones, wherein each of the corresponding two 106-tone dRUs is built from corresponding two 52-tone dRUs, or four 26-tone dRUs, with two extra padding tones, and wherein each of the corresponding two 52-tone dRUs is built from corresponding two 26-tone dRUs.

6. The method of Claim 1 or the apparatus of Claim 2, wherein the dRU comprises a 996-tone dRU built from corresponding two 484-tone dRUs and one 26-tone dRU with twenty-eight extra padding tones, wherein each of the corresponding two 484-tone dRUs is built from corresponding two 242-tone dRUs, wherein each of the corresponding two 242-tone dRUs is built from corresponding two 106-tone dRUs and one 26-tone dRU with four extra padding tones, wherein each of the corresponding two 106-tone dRUs is built from corresponding two 52-tone dRUs, or four 26-tone dRUs, with two extra padding tones, and wherein each of the corresponding two 52-tone dRUs is built from corresponding two 26-tone dRUs.

7. The method of any one of Claims 1 and 3 to 6, or the apparatus of any one of Claims 2 to 6, wherein parameters of the dRU used in the wireless communication in the 160MHz distribution bandwidth are two times scaled up from corresponding parameters of the dRU used in wireless communications in an 80MHz bandwidth, and wherein the parameters of the dRU used in the wireless communication in the 160MHz distribution bandwidth comprise a periodicity or repetition period (Nₚ) and a dRU tone separation distance (D_{td}).

8. The method or the apparatus of Claim 7, wherein, for the wireless communication in the 160MHz distribution bandwidth, Nₚ = 72 and D_{td} = 16, 8 and 4 for the 106-tone dRU, the 242-tone dRU and the 484-tone dRU, respectively.

9. The method or the apparatus of Claim 7 or 8, wherein, for the wireless communication in the 160MHz distribution bandwidth, Nₚ = 72 and a tone plan of the dRU is uniformly distributed in an event that the dRU comprises a 242-tone dRU, a 484-tone dRU or a 996-tone dRU.

10. The method or the apparatus of Claim 7, wherein, for the wireless communication in the 160MHz distribution bandwidth, Nₚ = 74.

11. The method of any one of Claims 1 and 3 to 10, or the apparatus of any one of Claims 2 to 10, wherein a tone plan of the dRU comprises a distribution pattern repeated four times and a non-repeatable pattern, and wherein in a frequency domain:
the non-repeatable pattern is to a right side of the distribution pattern repeated four times; or
the non-repeatable pattern is between the distribution pattern repeated three times on a left side thereof and the distribution pattern repeated one time on a right side thereof; or
the non-repeatable pattern is between the distribution pattern repeated two times on the left side thereof and the distribution pattern repeated two times on the right side thereof.
